# EUROPÄISCHE PATENTANMELDUNG

(11) **EP 4 763 814 A1**
(43) Veröffentlichungstag der Anmeldung: **24.06.2026**
(21) Anmeldenummer: 24221554.9
(22) Anmeldetag: 19.12.2024
(51) Int. Cl.: C03B 37/018

(54) **VERFAHREN ZUR HERSTELLUNG EINER VORFORM EINER OPTISCHEN FASER**

(71) Anmelder: Heraeus Quarzglas GmbH & Co. KG, 63450 Hanau (DE)
(72) Erfinder: Krick, Konstantin, 63801 Kleinostheim (DE); Rudzinski, Eric, 63450 Hanau (DE); Bräuer, Karsten, 63450 Hanau (DE); Dr. Pihan, Sascha, 63801 Kleinostheim (DE)
(74) Vertreter: Heraeus IP

(57) **Zusammenfassung**

Die Erfindung betrifft ein Verfahren zur Herstellung einer Vorform einer optischen Faser, umfassend die Verfahrensschritte:
a. Synthetisieren von Glaspartikeln unter Verwendung einer durch einen Plasmaerzeuger erzeugten Plasmazone;
b. Wiederholtes axiales Vorwärts- und Rückwärtsbewegen einer Glasvorform relativ zum Plasmaerzeuger während einer Drehbewegung der Glasvorform, wobei das Vorwärts- und Rückwärtsbewegen zwischen zwei Umkehrpunkten mit einer relativen Vorschubgeschwindigkeit stattfindet;
c. Ablagern der Glaspartikel auf der Glasvorform, während sich die Glasvorform relativ zum Plasmaerzeuger bewegt und dreht.

## Beschreibung

Die Erfindung betrifft ein Verfahren zur Herstellung einer Vorform einer optischen Faser, umfassend die Verfahrensschritte:
a. Synthetisieren von Glaspartikeln unter Verwendung einer durch einen Plasmaerzeuger erzeugten Plasmazone;
b. Wiederholtes axiales Vorwärts- und Rückwärtsbewegen einer Glasvorform relativ zum Plasmaerzeuger während einer Drehbewegung der Glasvorform, wobei das Vorwärts- und Rückwärtsbewegen zwischen zwei Umkehrpunkten mit einer relativen Vorschubgeschwindigkeit stattfindet;
c. Ablagern der Glaspartikel auf der Glasvorform, während sich die Glasvorform relativ zum Plasmaerzeuger bewegt und dreht;
dadurch gekennzeichnet, dass
(i) die relative Vorschubgeschwindigkeit des Plasmaerzeugers zur Glasvorform in einer Mitte der Glasvorform einen Betrag V_{Mitte} aufweist;
(ii) die relative Vorschubgeschwindigkeit des Plasmaerzeugers zur Glasvorform von V_{Mitte} auf einen Betrag Vₕᵢₙ reduziert wird, wenn sich der Plasmaerzeuger relativ von der Mitte der Glasvorform auf einen der Umkehrpunkte zubewegt;
(iii) die relative Vorschubgeschwindigkeit des Plasmaerzeugers zur Glasvorform von einem Betrag V_{rück} auf V_{Mitte} reduziert wird, wenn sich der Plasmaerzeuger relativ von einem der Umkehrpunkte auf die Mitte der Glasvorform zubewegt.

### Hintergrund der Erfindung

Vorformen zur Herstellung einer optischen Faser werden häufig mittels eines Plasmaerzeugers, wie beispielsweise eines Plasmabrenners erzeugt. Ein solcher Plasmaerzeuger in Form eines Plasmabrenners kann beispielsweise ein Hochfrequenz-Induktions-Plasmabrenner genannt sein: Dies ist ein Plasmabrenner, welcher mit einer Hochfrequenzspule am Rand eines Gasstromrohrs ausgestattet ist. Ein Hochfrequenzstrom wird angelegt, um das darin enthaltene Gas zu ionisieren und das entstehende Plasma aus einer Düse zu emittieren. Der Plasmaerzeuger kann weiterhin ein Plasmabrenner sein, welcher mit einer anderen Technologie, beispielsweise mittels Mikrowellenstrahlung, betrieben wird. Der Plasmaerzeuger kann auch ein Gerät sein, welche ein Plasma mittels Induktion erzeugt. Ein derartiger Plasmaerzeuger umfasst vorzugsweise eine Induktionsspule, welche das Plasma erzeugt.

Das derart erzeugte Plasma wird zur Synthese von Glaspartikeln genutzt, welche durch Ablagerung auf einer Glasvorform, wie beispielsweise einem Glasstab einem Glasrohr, abgeschieden werden. Dazu werden Glasausgangsstoffe, wie beispielsweise Siliciumtetrachlorid, optional Dotierstoffe, wie beispielsweise Schwefelhexafluorid, sowie Sauerstoff und etwaige Hilfsgase, wie beispielsweise Stickstoff oder Argon, kontinuierlich dem Plasma zugeführt und die derart synthetisierten Glaspartikel auf einer Oberfläche einer Glasvorform, wie einen Glasstab oder einem Glasrohr, welche sich relativ zum Plasmaerzeuger unter Drehen vorwärts und rückwärts bewegt, abgelagert.

Die Ablagerung der synthetisierten Glaspartikel gestaltet sich insbesondere an den Rändern der Glasvorform als anspruchsvoll, da diese innerhalb kürzester Zeit einer doppelten Überfahrung durch den Plasmaerzeuger erfahren, einmal auf dem Hinweg und direkt danach wieder auf dem Rückweg, was diese Stellen daher besonders stark thermisch beansprucht. Gleichzeitig erfahren die Ränder aber auch eine besonders starke Abkühlung, wenn der Plasmaerzeuger sich im Bereich des gegenüberliegenden Rands der Glasvorform aufhält. In anderen Worten ausgedrückt, kühlen die Ränder sich zwischen zwei Überfahrten besonders stark ab (bei Überfahren des jeweils gegenüberliegenden Rands) und erwärmen sich auch besonders stark (bei der doppelten Überfahrung des entsprechenden Rands). Insbesondere die direkt aufeinander folgende doppelte Überfahrung, und damit einhergehend die besonders starke Erwärmung des entsprechenden Randes, führt zu einem teilweisen Verdampfen der an dem entsprechenden Rand abgelagerten synthetisierten Glaspartikel. Dies führt zu einem ungleichmäßigen Materialaufbau der Ränder im Vergleich zu den thermisch weniger beanspruchten mittleren Bereichen der Glasvorform. Eine etwaige Dotierung der synthetisierten Glaspartikel ist an den Rändern ebenso negativ von der thermischen Belastung betroffen, weshalb die Ränder eine im Vergleich zu den mittleren Bereichen der Glasvorform geringere Dotierung aufweisen, wie dies beispielsweise in der europäischen Patentanmeldung EP 1 997 783 A2 beschrieben wurde. Die geringere Dotierung kann dabei das Resultat einer thermisch bedingten Ausdiffusion sein. Die hohe thermische Belastung der Ränder der Glasvorform sorgen somit zu einem hohen Produktionsausschuss, da die Ränder der Glasvorform nicht für eine Weiterverarbeitung zur Herstellung einer optischen Faser geeignet sind.

Prinzipiell gibt es mehrere Methoden zur Abscheidung der synthetisierten Glaspartikel auf einer Glasvorform: (1) Die Partikel werden zunächst in Form einer porösen Schicht abgelagert, deren Porosität anschließend in einem speziellen thermischen Verfahren durch Aufschmelzen eliminiert wird. Dieser Schritt führt zu einer Verdichtung der zunächst porösen Struktur zu einem homogenen Glas. (2) Alternativ erfolgt die Abscheidung direkt als kompakte Glasschicht, wodurch der nachgelagerte Verdichtungsschritt entfällt.

Die oben beschriebenen Schwierigkeiten, insbesondere die thermische Belastung an den Rändern der Glasvorform, stellen bei all diesen Methoden eine Herausforderung dar.

Es besteht daher im Markt der Wunsch nach einem verbesserten Verfahren zur Herstellung einer Vorform einer optischen Faser.

### Aufgaben

Eine Aufgabe der vorliegenden Erfindung ist es, einen oder mehrere der sich aus dem Stand der Technik ergebenen Nachteile zumindest teilweise zu überwinden.

Insbesondere ist es eine Aufgabe der Erfindung, ein Verfahren zur Herstellung einer Vorform einer optischen Faser bereitzustellen, welches einen möglichst geringen Produktionsausschuss aufweist. Weiter soll das Verfahren eine Vorform mit einer möglichst gleichmäßigen Dotierung bereitstellen. Das erfindungsgemäße Verfahren soll möglichst einfach umzusetzen sein. Weiterhin soll es möglichst kostengünstig darstellbar sein.

### Bevorzugte Ausführungsformen der Erfindung

Ein Beitrag zur mindestens teilweisen Erfüllung mindestens einer der zuvor genannten Aufgaben wird durch die Merkmale der unabhängigen Ansprüche geleistet. Die abhängigen Ansprüche stellen bevorzugte Ausführungsformen bereit, die zur mindestens teilweisen Erfüllung mindestens einer der Aufgaben beitragen.

Eine erste Ausführungsform der Erfindung ist ein Verfahren zur Herstellung einer Vorform einer optischen Faser, umfassend die Verfahrensschritte:
a. Synthetisieren von Glaspartikeln unter Verwendung einer durch einen Plasmaerzeuger erzeugten Plasmazone;
b. Wiederholtes axiales Vorwärts- und Rückwärtsbewegen einer Glasvorform relativ zum Plasmaerzeuger während einer Drehbewegung der Glasvorform, wobei das Vorwärts- und Rückwärtsbewegen zwischen zwei Umkehrpunkten mit einer relativen Vorschubgeschwindigkeit stattfindet;
c. Ablagern der Glaspartikel auf der Glasvorform, während sich die Glasvorform relativ zum Plasmaerzeuger bewegt und dreht;
dadurch gekennzeichnet, dass
(i) die relative Vorschubgeschwindigkeit des Plasmaerzeuger zur Glasvorform in einer Mitte der Glasvorform einen Betrag V_{Mitte} aufweist;
(ii) die relative Vorschubgeschwindigkeit des Plasmaerzeuger zur Glasvorform von V_{Mitte} auf einen Betrag Vₕᵢₙ reduziert wird, wenn sich der Plasmaerzeuger relativ von der Mitte der Glasvorform auf einen der Umkehrpunkte zubewegt;
(iii) die relative Vorschubgeschwindigkeit des Plasmaerzeugers zur Glasvorform von einem Betrag V_{rück} auf V_{Mitte} reduziert wird, wenn sich der Plasmaerzeuger relativ von einem der Umkehrpunkte auf die Mitte der Glasvorform zubewegt.

Eine bevorzugte Ausführungsform des Verfahrens ist dadurch gekennzeichnet, dass V_{rück} > V_{Mitte} > Vₕᵢₙ ist, oder anders ausgedrückt V_{rück} einen größeren Betrag aufweist als V_{Mitte} und V_{Mitte} einen größeren Betrag aufweist als Vₕᵢₙ. Diese Ausführungsform ist eine zweite Ausführungsform des Verfahrens, welche vorzugsweise von der ersten Ausführungsform der Erfindung abhängig ist.

Eine bevorzugte Ausführungsform des Verfahrens ist dadurch gekennzeichnet, dass eine Differenz der Beträge von V_{Mitte} zu Vₕᵢₙ im Wesentlichen einer Differenz der Beträge von V_{rück} zu V_{Mitte} entspricht. Diese Ausführungsform ist eine dritte Ausführungsform der Erfindung, welche vorzugsweise von der ersten oder zweiten Ausführungsform der Erfindung abhängig ist.

Eine bevorzugte Ausführungsform des Verfahrens ist dadurch gekennzeichnet, dass die Reduktionen der relativen Vorschubgeschwindigkeiten von V_{Mitte} auf Vₕᵢₙ und von V_{rück} auf V_{Mitte} einen im Wesentlichen exponentiellen oder parabelförmigen Verlauf aufweisen. Diese Ausführungsform ist eine vierte Ausführungsform der Erfindung, welche vorzugsweise von einer der vorhergehenden Ausführungsformen der Erfindung abhängig ist.

Eine bevorzugte Ausführungsform des Verfahrens ist dadurch gekennzeichnet, dass die in Verfahrensschritt a. synthetisierten Glaspartikel einen Dotierstoff enthalten. Diese Ausführungsform ist eine fünfte Ausführungsform der Erfindung, welche vorzugsweise von einer der vorhergehenden Ausführungsformen der Erfindung abhängig ist.

Eine bevorzugte Ausführungsform des Verfahrens ist dadurch gekennzeichnet, dass V_{Mitte} einen Betrag in einem Bereich zwischen 500 mm/min und 3000 mm/min aufweist. Diese Ausführungsform ist eine sechste Ausführungsform der Erfindung, welche vorzugsweise von einer der vorhergehenden Ausführungsformen der Erfindung abhängig ist.

Eine bevorzugte Ausführungsform des Verfahrens ist dadurch gekennzeichnet, dass Vₕᵢₙ einen Betrag in einem Bereich zwischen dem 0,4-fachen bis 0,9-fachen von V_{Mitte} aufweist. Diese Ausführungsform ist eine siebte Ausführungsform der Erfindung, welche vorzugsweise von einer der vorhergehenden Ausführungsformen der Erfindung abhängig ist.

Eine bevorzugte Ausführungsform des Verfahrens ist dadurch gekennzeichnet, dass V_{rück} einen Betrag in einem Bereich zwischen dem 1,1-fachen bis 1,6-fachen von V_{Mitte} aufweist. Diese Ausführungsform ist eine achte Ausführungsform der Erfindung, welche vorzugsweise von einer der vorhergehenden Ausführungsformen der Erfindung abhängig ist.

Eine bevorzugte Ausführungsform des Verfahrens ist dadurch gekennzeichnet, dass eine mittlere Verweildauer des Plasmaerzeugers an jeder axialen Position der Glasvorform im Wesentlichen gleich ist. Diese Ausführungsform ist eine neunte Ausführungsform der Erfindung, welche vorzugsweise von einer der vorhergehenden Ausführungsformen der Erfindung abhängig ist.

Eine bevorzugte Ausführungsform des Verfahrens ist dadurch gekennzeichnet, dass die relative Vorschubgeschwindigkeit den Betrag V_{Mitte} über eine axiale Erstreckung an der Glasvorform einnimmt, welche 0 % bis 50 %, bevorzugt 15 % bis 45 %, einer axialen Gesamtlänge der Glasvorform entspricht. Diese Ausführungsform ist eine zehnte Ausführungsform der Erfindung, welche vorzugsweise von einer der vorhergehenden Ausführungsformen der Erfindung abhängig ist.

Eine bevorzugte Ausführungsform des Verfahrens ist dadurch gekennzeichnet, dass
(i) eine Plasmaleistung in der Mitte der Glasvorform einen Wert von P_{Mitte} aufweist;
(ii) die Plasmaleistung von P_{Mitte} auf einen Wert von Pₕᵢₙ erhöht wird, wenn sich der Plasmaerzeuger relativ von der Mitte der Glasvorform auf einen der Umkehrpunkte zubewegt;
(iii) die Plasmaleistung von einem Wert P_{rück} auf P_{Mitte} erhöht wird, wenn sich der Plasmaerzeuger relativ von einem der Umkehrpunkte auf die Mitte der Glasvorform zubewegt.

Diese Ausführungsform ist eine elfte Ausführungsform der Erfindung, welche vorzugsweise von einer der vorhergehenden Ausführungsformen der Erfindung abhängig ist.

Eine bevorzugte Ausführungsform des Verfahrens ist dadurch gekennzeichnet, dass die Plasmaleistung erhöht wird, wenn die relative Vorschubgeschwindigkeit reduziert wird. Diese Ausführungsform ist eine zwölfte Ausführungsform der Erfindung, welche vorzugsweise von der elften Ausführungsform der Erfindung abhängig ist.

Eine bevorzugte Ausführungsform des Verfahrens ist dadurch gekennzeichnet, dass die Glasvorform im Laufe des Verfahrens eine Temperatur zwischen einer Minimaltemperatur T_{Min} und einer Maximaltemperatur T_{Max} aufweist, wobei zwischen T_{Min} und T_{Max} eine Temperaturdifferenz T_{Diff} von maximal 200 K liegt. Diese Ausführungsform ist eine dreizehnte Ausführungsform der Erfindung, welche vorzugsweise von einer der vorhergehenden Ausführungsformen der Erfindung abhängig ist.

Eine bevorzugte Ausführungsform des Verfahrens ist dadurch gekennzeichnet, dass T_{Max} maximal einen Wert von 2650 °C annimmt. Diese Ausführungsform ist eine vierzehnte Ausführungsform der Erfindung, welche vorzugsweise von der dreizehnten Ausführungsform der Erfindung abhängig ist.

Eine bevorzugte Ausführungsform des Verfahrens ist dadurch gekennzeichnet, dass die Glasvorform ein Glasstab, der Plasmaerzeuger ein Plasmabrenner und die Plasmazone eine Plasmaflamme ist. Diese Ausführungsform ist eine fünfzehnte Ausführungsform der Erfindung, welche vorzugsweise von einer der vorhergehenden Ausführungsformen der Erfindung abhängig ist.

### Allgemeines

Zu den hierin beschriebenen Ausführungsformen, deren Elemente ein bestimmtes Merkmal (z.B. ein Material) "aufweisen", oder "umfassen" wird grundsätzlich immer eine weitere Ausführungsform erwogen, in denen das betreffende Element allein aus dem Merkmal besteht, d.h. keine weiteren Bestandteile umfasst. Das Wort "umfassen" oder "umfassend" wird hierin synonym mit dem Wort "aufweisen" oder "aufweisend" verwendet.

Wenn in einer Ausführungsform ein Element mit dem Singular bezeichnet ist, wird ebenfalls eine Ausführungsform erwogen, bei denen mehrere dieser Elemente vorhanden sind. Die Verwendung eines Begriffs für ein Element im Plural umfasst grundsätzlich auch eine Ausführungsform, in welchem nur ein einzelnes entsprechendes Element enthalten ist. Soweit nicht anders angegeben oder aus dem Zusammenhang eindeutig ausgeschlossen, ist es grundsätzlich möglich und wird hiermit eindeutig in Betracht gezogen, dass Merkmale unterschiedlicher Ausführungsformen auch in den anderen hierin beschriebenen Ausführungsformen vorhanden sein können. Ebenso wird grundsätzlich erwogen, dass alle Merkmale, die hierin in Zusammenhang mit einem Verfahren beschrieben werden, auch für die hierin beschriebenen Erzeugnisse und Vorrichtungen anwendbar sind, und umgekehrt. Lediglich aus Gründen der knapperen Darstellung werden alle diese erwogenen Kombinationen nicht in allen Fällen explizit aufgeführt. Auch technische Lösungen, die zu den hierin beschriebenen Merkmalen bekanntermaßen gleichwertig sind, sollen grundsätzlich vom Umfang der Erfindung umfasst sein.

In der vorliegenden Beschreibung beinhalten Bereichsangaben auch die als Grenzen genannten Werte beziehungsweise Beträge. Eine Angabe der Art "im Bereich von X bis Y" in Bezug auf eine Größe A bedeutet folglich, dass A die Werte beziehungsweise Beträge X, Y und Werte beziehungsweise Beträge zwischen X und Y annehmen kann. Einseitig begrenzte Bereiche der Art "bis zu Y" für eine Größe A bedeuten entsprechend als Wert beziehungsweise Beträge Y und kleiner als Y.

Einige der beschriebenen Merkmale sind mit dem Begriff "im Wesentlichen" verknüpft. Der Begriff "im Wesentlichen" ist so zu verstehen, dass unter realen Bedingungen und Fertigungstechniken eine mathematisch exakte Auslegung von Begrifflichkeiten wie "Überlagerung", "senkrecht", "Durchmesser" oder "Parallelität" nie exakt, sondern nur innerhalb gewisser fertigungstechnischer Fehlertoleranzen gegeben sein kann. Beispielsweise schließen "im Wesentlichen senkrechte Achsen" einen Winkel von 85 Grad bis 95 Grad zueinander ein und "im Wesentlichen gleiche Volumen" umfassen eine Abweichung von bis zu 5 Volumen-%. Eine "im Wesentlichen aus Kunststoff bestehende Vorrichtung" umfasst beispielsweise einen Kunststoffanteil von ≥95 bis ≤100 Gewichts-%. Eine "im Wesentlichen vollständige Befüllung eines Volumens B" umfasst beispielsweise eine Befüllung von ≥95 bis ≤100 Volumen-% des Gesamtvolumens von B.

Wenn ein unbestimmter oder bestimmter Artikel verwendet wird, wenn auf ein singuläres Substantiv Bezug genommen wird, z. B. "ein", "eine" oder "der/die/das", schließt dies einen Plural dieses Substantivs ein, sofern nicht ausdrücklich etwas anderes angegeben ist. Wenn der Begriff "umfassend" in der vorliegenden Beschreibung und den Ansprüchen verwendet wird, werden andere Elemente dadurch nicht ausgeschlossen.

Für die Zwecke der vorliegenden Erfindung werden die Begriffe "im Wesentlichen bestehend aus" und "bestehend aus" als Ausführungsformen des Begriffs "umfassend" betrachtet. Wenn im Folgenden definiert wird, dass eine Gruppe mindestens eine bestimmte Anzahl von Ausführungsformen umfasst, ist dies auch so zu verstehen, dass eine Gruppe offenbart wird, die in einer Ausführungsform im Wesentlichen nur aus diesen Ausführungsformen besteht oder in einer Ausführungsform nur aus diesen Ausführungsformen besteht.

Begriffe wie "erhältlich" oder "definierbar" und "erhalten" oder "definiert" werden austauschbar verwendet. Dies bedeutet zum Beispiel, dass der Begriff "erhalten" nicht bedeutet, dass eine Ausführungsform beispielsweise durch die auf den Begriff "erhalten" folgende Abfolge von Schritten erhalten werden muss, es sei denn, der Kontext schreibt eindeutig etwas anderes vor, obwohl ein solches begrenztes Verständnis immer in den Begriffen "erhalten" oder "definiert" als eine Ausführungsform eingeschlossen ist. Immer wenn die Begriffe "einschließlich" oder "mit" verwendet werden, sind diese Begriffe gleichbedeutend mit "umfassend", wie hierin vorstehend definiert.

### Ausführliche Beschreibung

Ein erster Gegenstand der Erfindung betrifft ein Verfahren zur Herstellung einer Vorform einer optischen Faser, umfassend die Verfahrensschritte:
a. Synthetisieren von Glaspartikeln unter Verwendung einer durch einen Plasmaerzeuger erzeugten Plasmazone;
b. Wiederholtes axiales Vorwärts- und Rückwärtsbewegen einer Glasvorform relativ zum Plasmaerzeuger während einer Drehbewegung der Glasvorform, wobei das Vorwärts- und Rückwärtsbewegen zwischen zwei Umkehrpunkten mit einer relativen Vorschubgeschwindigkeit stattfindet;
c. Ablagern der Glaspartikel auf der Glasvorform, während sich die Glasvorform relativ zum Plasmaerzeuger bewegt und dreht;
dadurch gekennzeichnet, dass
(i) die relative Vorschubgeschwindigkeit des Plasmaerzeugers zur Glasvorform in einer Mitte der Glasvorform einen Betrag VMitte aufweist;
(ii) die relative Vorschubgeschwindigkeit des Plasmaerzeugers zur Glasvorform von VMitte auf einen Betrag Vhin reduziert wird, wenn sich der Plasmaerzeuger relativ von der Mitte der Glasvorform auf einen der Umkehrpunkte zubewegt;
(iii) die relative Vorschubgeschwindigkeit des Plasmaerzeugers zur Glasvorform von einem Betrag Vrück auf VMitte reduziert wird, wenn sich der Plasmaerzeuger relativ von einem der Umkehrpunkte auf die Mitte der Glasvorform zubewegt.

In einem Verfahrensschritt a. erfolgt ein Synthetisieren von Glaspartikel unter Verwendung einer durch einen Plasmaerzeuger erzeugten Plasmazone. Der Plasmaerzeuger kann die Plasmazone beispielsweise mittels einer Induktionsspule erzeugen. In einer bevorzugten Ausführungsform ist der Plasmaerzeuger ein Plasmabrenner, welcher eine Plasmazone in Form einer Plasmaflamme erzeugt.

Zur Erzeugung der Glaspartikel werden der Plasmazone, vorzugsweise konstant, Glasausgangsstoffe, wie vorzugsweise Siliciumtetrachlorid, zusammen mit Sauerstoff sowie Argon und/oder Stickstoff zugeführt, welche sich in der Plasmazone zu Glaspartikeln umsetzten. Optional können Dotierstoffe zugesetzt werden, um den Brechungsindex der Glaspartikel der Anwendung der Vorform anzupassen. Vorzugsweise wird dazu der Plasmazone, zusammen mit den restlichen Glasausgangsstoffen, Schwefelhexafluorid zugeführt, um fluorierte Glaspartikel zu erhalten.

In einem Verfahrensschritt b. erfolgt ein wiederholtes axiales Vorwärts- und Rückwärtsbewegen einer Glasvorform, wie beispielsweise eines Glasstabs oder eines Glasrohrs, relativ zum Plasmaerzeuger. Dabei kann entweder die Glasvorform, der Plasmaerzeuger oder die Glasvorform sowie der Plasmaerzeuger bewegt werden. Das Vorwärtsbewegen und Rückwärtsbewegen der Glasvorform relativ zum Plasmaerzeuger findet zwischen zwei Umkehrpunkten statt, an denen die Relativbewegung die Richtung wechselt, also beispielsweise eine Vorwärtsbewegung sich in eine Rückwärtsbewegung umkehrt. Die Relativbewegung findet in axialer Erstreckung statt, also entlang der Längsachse der Glasvorform. Die Relativbewegung findet mindestens über die gesamte Länge der Glasvorform, vorzugsweise gar über die Randbereiche der Glasvorform hinaus, statt, so dass der Plasmaerzeuger bei jeder Vorwärtsbewegung und bei jeder Rückwärtsbewegung an jeder axialen Position der Glasvorform jeweils einmal positioniert ist. In anderen Worten sind die Umkehrpunkte derart angeordnet, dass die Glasvorform mit ihrer gesamten axialen Länge zwischen den beiden Umkehrpunkten angeordnet ist.

Die synthetisierten Glaspartikel lassen sich somit an jeder axialen Position der Glasvorform bei jeder der Relativbewegungen ablagern, oder in anderen Worten abscheiden (siehe Verfahrensschritt c.).

Gleichzeitig mit der Relativbewegung findet eine Drehbewegung um die Längsachse, oder in anderen Worten eine Rotation, der Glasvorform statt, so dass eine gleichmäßige Abscheidung der synthetisierten Glaspartikel auch um den Umfang der Glasvorform ermöglicht ist (siehe Verfahrensschritt c.).

Die Glasvorform umfasst vorzugsweise ein Quarzglas, vorzugsweise besteht die Glasvorform aus Quarzglas. Je nach Anwendungsgebiet der Vorform kann das Quarzglas der Glasvorform einen Dotierstoff, wie beispielsweise Fluor, enthalten.

In einem Verfahrensschritt c. erfolgt ein Ablagern, oder in anderen Worten ein Abscheiden, der in der Plasmazone des Plasmaerzeugers synthetisierten Glaspartikel auf der sich relativ zum Plasmaerzeuger bewegenden und drehenden Glasvorform.

In einer Ausführungsform ist die Glasvorform ein Glasrohr und die Plasmazone wird innerhalb des Glasrohrs erzeugt, wobei die synthetisierten Glaspartikel auf einer Innenfläche des Glasrohrs abgelagert werden. In dieser Ausführungsform erzeugt der Plasmaerzeuger die Plasmazone vorzugsweise mittels Induktion, wozu der Plasmaerzeuger vorzugsweise eine Induktionsspule aufweist, welche vorzugsweise manschettenartig um das Glasrohr angeordnet ist. Die Induktionsspule wird in dieser Ausführungsform relativ zum Glasrohr bewegt, wobei sich die im Glasrohr durch die Induktionsspule erzeugte Plasmazone zusammen mit der Induktionsspule bewegt. In dieser Ausführungsform findet die Ablagerung der synthetisierten Glaspartikel an der Innenfläche des Glasrohrs statt.

In einer weiteren Ausführungsform ist die Glasvorform ein Glasstab und die Plasmazone wird durch eine Plasmaflamme eines Plasmabrenners erzeugt. In dieser Ausführungsform wird der Plasmabrenner relativ zum Glasstab bewegt, während die Plasmaflamme auf den Glasstab aufgeblasen wird, wodurch sich die synthetisierten Glaspartikel auf eine Außenfläche des Glasstabs ablagern.

Um ein möglichst gleichmäßiges Ablagern der Glaspartikel auf der Glasvorform zu erreichen, wird eine relative Vorschubgeschwindigkeit, also die Geschwindigkeit, mit welcher sich der Plasmaerzeuger und die Glasvorform relativ zueinander bewegen, an eine axiale Position des Plasmaerzeugers bezüglich der Längsachse der Glasvorform angepasst. Die relative Vorschubgeschwindigkeit ist also nicht über die gesamte Länge der Glasvorform konstant, sondern variiert je nach der relativen Anordnung von Plasmaerzeuger und Glasvorform.

In einer Mitte, insbesondere einer axialen Mitte, der Glasvorform weist die relative Vorschubgeschwindigkeit einen Betrag V_{Mitte} auf.

Bewegt sich der Plasmaerzeuger relativ zur Glasvorform von der Mitte der Glasvorform auf einen der Umkehrpunkte zu, wird die relative Vorschubgeschwindigkeit vom Betrag V_{Mitte} auf einen Betrag Vₕᵢₙ reduziert. Die relative Vorschubgeschwindigkeit wird also verlangsamt, wenn sich der Plasmaerzeuger von der Mitte der Glasvorform auf einen der Umkehrpunkte zubewegt. Die Verlangsamung von V_{Mitte} auf Vₕᵢₙ kann direkt in der Mitte der Glasvorform einsetzen. In weiteren Ausführungsformen des Verfahrens setzt die Verlangsamung von V_{Mitte} auf Vₕᵢₙ nicht direkt in der Mitte der Glasvorform ein, sondern erst nachdem der Plasmabrenner sich relativ zur Glasvorform von der Mitte der Glasvorform aus gesehen über 5 % bis 40 %, vorzugsweise über 10 % bis 35 %, weiter bevorzugt über 15 % bis 30 %, der Gesamtlänge der Glasvorform in Richtung des entsprechenden Umkehrpunkts fortbewegt hat.

Vorzugsweise verlangsamt sich die relative Vorschubgeschwindigkeit von V_{Mitte} bis auf Vₕᵢₙ kontinuierlich bis der Betrag Vₕᵢₙ erreicht ist.

Von der Mitte der Glasvorform in Richtung eines der Umkehrpunkte verbleibt somit, sofern die Verlangsamung der relativen Vorschubgeschwindigkeit von V_{Mitte} auf Vₕᵢₙ eingesetzt hat, der Plasmaerzeuger stetig länger über einer bestimmten axialen Position der Glasvorform als dies bei der relativen Vorschubgeschwindigkeit V_{Mitte} der Fall wäre. Vorzugsweise verbleibt der Plasmaerzeuger relativ zur Glasvorform am längsten über einer bestimmten axialen Position der Glasvorform, wenn die relative Vorschubgeschwindigkeit den Betrag Vₕᵢₙ angenommen hat. Die Reduktion der relativen Vorschubgeschwindigkeit von V_{Mitte} auf Vₕᵢₙ führt dazu, dass eine bestimmte axiale Position der Glasvorform umso langsamer überfahren wird, je länger die letzte Überfahrt des Plasmaerzeuger an dieser Position her ist. Dies kann die verstärkte Abkühlung der entsprechenden Position seit der letzten Überfahrt zumindest teilweise ausgleichen, was zu einer gleichmäßigeren thermischen Belastung führen kann.

Am Umkehrpunkt, welcher sich vorzugsweise räumlich hinter dem entsprechenden Ende der Glasvorform befindet, findet dann eine, vorzugsweise sofortige, Umkehr der Relativbewegung statt. Aus einer Vorwärtsbewegung wird somit Rückwärtsbewegung oder umgekehrt.

Bewegt sich der Plasmaerzeuger relativ von einem der Umkehrpunkte auf die Mitte der Glasvorform zu, wird die relative Vorschubgeschwindigkeit von einem Betrag V_{rück} auf den Betrag V_{Mitte} reduziert. Die relative Vorschubgeschwindigkeit wird also verlangsamt, wenn sich der Plasmaerzeuger von einem der Enden der Glasvorform auf die Mitte der Glasvorform zubewegt.

Vorzugsweise verlangsamt sich die relative Vorschubgeschwindigkeit von V_{rück} bis auf V_{Mitte} kontinuierlich bis der Betrag V_{Mitte} erreicht ist. Vorzugsweise weist die relative Vorschubgeschwindigkeit somit bei einer Relativbewegung in Richtung der Mitte der Glasvorform am entsprechenden Ende der Glasvorform den höchsten Betrag der relativen Vorschubgeschwindigkeit, vorzugsweise den Betrag V_{rück}, auf, wobei dieser Betrag, vorzugsweise kontinuierlich, reduziert wird, bis wieder der Betrag V_{Mitte} erreicht wird. Der Betrag V_{Mitte} kann erst direkt an der Mitte der Glasvorform erreicht werden. In weiteren Ausführungsformen wird der Betrag V_{Mitte} erreicht, wenn der Plasmaerzeuger relativ zur Glasvorform noch 5 % bis 45 %, vorzugsweise noch 10 % bis 40 %, weiter bevorzugt noch 15 % bis 35 %, der Gesamtlänge der Glasvorform von der Mitte der Glasvorform entfernt ist. Vom entsprechenden Ende der Glasvorform in Richtung der Mitte der Glasvorform verbleibt somit der Plasmaerzeuger stetig länger über einer bestimmten axialen Position der Glasvorform als dies bei der relativen Vorschubgeschwindigkeit V_{rück} der Fall wäre. Dabei verbleibt der Plasmaerzeuger relativ zur Glasvorform am kürzesten über einer bestimmten axialen Position der Glasvorform, wenn die relative Vorschubgeschwindigkeit den Betrag V_{rück} aufweist. Gleichzeitig ergibt sich daraus, dass eine bestimmte axiale Position der Glasvorform, die gerade erst mit einem Betrag für die relative Vorschubgeschwindigkeit überfahren wurde, welcher zwischen V_{Mitte} und Vₕᵢₙ liegt, in der direkt darauffolgenden Überfahrt mit einem höheren Betrag für die relative Vorschubgeschwindigkeit, nämlich zwischen V_{rück} und V_{Mitte}, überfahren wird. Auf eine im Vergleich zu V_{Mitte} verlangsamte Hinfahrt folgt somit direkt im Anschluss im Vergleich zu V_{Mitte} beschleunigte Rückfahrt.

In Summe ergibt sich somit folgender Verlauf der relativen Vorschubgeschwindigkeit:
Die relative Vorschubgeschwindigkeit weist in der Mitte der Glasvorform den Betrag V_{Mitte} auf. Bei einer Relativbewegung des Plasmaerzeugers zur Glasvorform von der Mitte der Glasvorform in Richtung eines der Umkehrpunkte wird die relative Vorschubgeschwindigkeit von V_{Mitte} auf Vₕᵢₙ reduziert, bis die langsamste relative Vorschubgeschwindigkeit, vorzugsweise als Betrag Vₕᵢₙ, bei Erreichen des entsprechenden Endes der Glasvorform erreicht wird. Am Umkehrpunkt erfolgt eine Richtungsänderung der Relativbewegung. Die relative Vorschubgeschwindigkeit nimmt bei der Relativbewegung vom entsprechenden Umkehrpunkt in Richtung der Mitte der Glasvorform den Betrag V_{rück} an, welcher in Richtung der Mitte der Glasvorform wieder auf den Betrag V_{Mitte}, reduziert wird. Einer im Vergleich V_{Mitte} verlangsamten Hinfahrt zum Rand der Glasvorform folgt direkt im Anschluss eine im Vergleich zu V_{Mitte} beschleunigten Rückfahrt vom gleichen Rand in Richtung der Mitte der Glasvorform.

Durch die Variation der relativen Vorschubgeschwindigkeit kann die thermische Belastung insbesondere der Ränder der Glasvorform reduziert werden, was eine gleichmäßigere Abscheidung der synthetisierten Glaspartikel erlaubt. Dies führt zu einem geringerem Produktionsausschuss. Insbesondere das relativ schnelle Überfahren vom jeweiligen Rand in Richtung der Mitte der Glasvorform, welches mit einer relativen Vorschubgeschwindigkeit zwischen V_{rück} und V_{Mitte} durchgeführt wird, reduziert die thermische Belastung. Als Ausgleich erfolgt das Überfahren in die entgegengesetzte Richtung, also von der Mitte der Glasvorform in Richtung des entsprechenden Umkehrpunktes, mit einer relativen Vorschubgeschwindigkeit zwischen V_{Mitte} und Vₕᵢₙ und damit verlangsamt im Vergleich zu dem Betrag V_{Mitte} im Bereich der Mitte der Glasvorform.

Die Ränder der Glasvorform erfahren somit bei der Relativbewegung des Plasmaerzeugers von der Mitte der Glasvorform in Richtung des entsprechenden Umkehrpunktes eine im Vergleich zur Mitte der Glasvorform erhöhte Exposition der Plasmazone, wohingegen in umgekehrter Richtung, also vom Umkehrpunkt in Richtung der Mitte der Glasvorform, eine vergleichsweise verringerte Exposition der Plasmazone, insbesondere im Bereich der Ränder der Glasvorform, stattfindet. Eine Temperaturdifferenz T_{Diff}, welche einer bestimmten axialen Position der Glasvorform zwischen zwei Überfahrten aufweist, kann somit im Vergleich zu einer Überfahrt mit einer immer konstanten relativen Vorschubgeschwindigkeit reduziert werden. Dies sorgt für eine gleichmäßigere thermische Belastung über die gesamte axiale Länge der Glasvorform, welche zu einer gleichmäßigeren Abscheidung der synthetisierten Glaspartikel über die axiale Länge der Glasvorform führt.

Das Verfahren ist durch die drei unterschiedlichen Beträge V_{Mitte}, Vₕᵢₙ und V_{rück} für die relative Vorschubgeschwindigkeit bestimmt, wobei sich aus dem vorbeschriebenen ergibt, dass die relative Vorschubgeschwindigkeit auch Werte zwischen diesen drei genannten Beträgen annimmt.

Aus dem vorbeschriebenen ergibt sich, dass der Betrag für V_{rück} größer ist als der Betrag von V_{Mitte} und der Betrag von V_{Mitte} größer ist als der Betrag von Vₕᵢₙ. Der Betrag von V_{Mitte} liegt somit zwischen den Beträgen für V_{rück} und V_{Mitte}.

Eine bevorzugte Ausführungsform des Verfahrens ist dadurch gekennzeichnet, dass eine Differenz der Beträge von V_{Mitte} zu Vₕᵢₙ im Wesentlichen, also innerhalb gewisser Toleranzen, insbesondere Fehlertoleranzen, einer Differenz der Beträge von V_{rück} zu V_{Mitte} entspricht. In dieser Ausführungsform liegt der Betrag von V_{Mitte} genau zwischen den Beträgen von V_{rück} und Vₕᵢₙ. In anderen Worten wird die relative Vorschubgeschwindigkeit in dieser Ausführungsform um den gleichen Wert reduziert, wenn der Plasmaerzeuger relativ zur Glasvorform von der Mitte der Glasvorform in Richtung eines der Umkehrpunkte und wenn der Plasmaerzeuger relativ zur Glasvorform von einem der Umkehrpunkt in Richtung der Mitte der Glasvorform verbracht wird. Dies kann zu einer verringerten Temperaturdifferenz T_{Diff} einer bestimmten axialen Position der Glasvorform zwischen den Überfahrten führen.

Die Änderungsrate der Verlangsamung der relativen Vorschubgeschwindigkeit von V_{Mitte} zu Vₕᵢₙ beziehungsweise von V_{rück} zu V_{Mitte} kann unterschiedlich ausgestaltet sein. Beispielsweise kann die Änderungsrate linear ausgestaltet sein, was zu einer konstanten Änderung der relativen Vorschubgeschwindigkeit führt.

Eine bevorzugte Ausführungsform des Verfahrens ist dadurch gekennzeichnet, dass die Reduktion der relativen Vorschubgeschwindigkeiten von V_{Mitte} auf Vₕᵢₙ und von V_{rück} auf V_{Mitte} einen im Wesentlichen exponentiellen oder parabelförmigen Verlauf aufweisen. In dieser Ausführungsform weist die Reduktion der relativen Vorschubgeschwindigkeiten eine Änderungsrate auf, welche zunehmend verstärkt wird, je näher sich die relative Vorschubgeschwindigkeit dem Zielwert, also Vₕᵢₙ beziehungsweise V_{Mitte}, nähert. Die Änderung der relativen Vorschubgeschwindigkeit erfolgt in dieser Ausführungsform nicht linear, sondern verstärkt sich progressiv.

Dies führt dazu, dass eine bestimmte axiale Position der Glasvorform umso langsamer überfahren wird, je länger die letzte Überfahrt des Plasmaerzeugers an dieser Position zurückliegt. Dies kann die verstärkte Abkühlung der entsprechenden Position seit der letzten Überfahrt zumindest teilweise ausgleichen, was zu einer gleichmäßigeren thermischen Belastung führen kann. Gleichzeitig werden axiale Positionen umso schneller vom Plasmaerzeuger überfahren, je kürzer die letzte Überfahrt des Plasmaerzeugers zurückliegt.

Auf eine besonders langsame Hinfahrt folgt somit eine besonders schnelle Rückfahrt, was zu einer gleichmäßigeren Ablagerung der synthetisierten Glaspartikel führen kann.

Eine bevorzugte Ausführungsform des Verfahrens ist dadurch gekennzeichnet, dass die in Verfahrensschritt a. synthetisierten Glaspartikel einen Dotierstoff enthalten. Vorzugsweise umfassen die synthetisierten Glaspartikel Dotierstoffe, welche ausgewählt sind aus der Gruppe bestehend aus Germaniumdioxid (GeOz), Phosphorpentoxid (P₂O₅), Fluor (F₂), Bordioxid (B₂O₃), Aluminiumoxid (Al₂O₃). Um die Dotierstoffe in die synthetisierten Glaspartikel einzubringen, werden der Plasmaflamme des Plasmabrenners entsprechende Dotierausgangsstoffe zugesetzt, welche dem Fachmann bekannt sind. Beispiele für derartige Dotierausgangsstoffe umfassen Germaniumtetrachlorid (GeCl₄), Phosphoroxidchlorid (POCl₃), Fluorwasserstoff (HF), Siliciumtetrafluorid (SiF₄), Bortrifluorid (BF₃), Schwefelhexafluorid (SF₆), sauerstoffhaltige Fluorierungsmittel, wie beispielsweise Perfluorketone, Perfluorether oder Hydrofluorether, nitrilhaltige Fluorierungsmittel, wie beispielsweise Perfluornitrile, Bortrichlorid (BCl₃) und Aluminiumchlorid (AlCl₃).

Die erfindungsgemäße Variation der relativen Vorschubgeschwindigkeit, welche die thermische Belastung insbesondere der Ränder der Glasvorform reduziert, wirkt sich ebenso positiv auf eine gleichmäßige Dotierstoffkonzentration über die axiale Länge der Glasvorform aus. Insbesondere kann eine gleichmäßigere Fluordotierung erreicht werden, welche besonders sensitiv auf ungleichmäßige thermische Belastungen bei der Abscheidung auf der Glasvorform reagiert.

Die relativen Vorschubgeschwindigkeiten V_{Mitte}, Vₕᵢₙ und V_{rück} können unterschiedliche absolute Beträge annehmen. Die absoluten Beträge können dabei beispielsweise in Abhängigkeit der Zusammensetzung der Glasvorform, der Zusammensetzung der synthetisierten Glaspartikel, der Länge der Glasvorform, deren Außendurchmessers und/oder deren Drehgeschwindigkeit angepasst werden.

Eine bevorzugte Ausführungsform des Verfahrens ist dadurch gekennzeichnet, dass V_{Mitte} einen Wert in einem Bereich zwischen 500 mm/min und 3000 mm/min, bevorzugt in einem Bereich zwischen 700 mm/min und 2500 mm/min, weiter bevorzugt in einem Bereich zwischen 800 mm/min und 1500 mm/min, aufweist.

Die Beträge für Vₕᵢₙ und V_{rück} sind insbesondere dem Betrag von V_{Mitte}, der Zusammensetzung der Glasvorform, der Zusammensetzung der synthetisierten Glaspartikel, der Länge der Glasvorform, deren Außendurchmessers und/oder deren Drehgeschwindigkeit anzupassen, um eine möglichst geringe thermische Belastung, insbesondere der Ränder der Glasvorform, zu erreichen.

Eine bevorzugte Ausführungsform des Verfahrens ist dadurch gekennzeichnet, dass Vₕᵢₙ einen Betrag in einem Bereich zwischen dem 0,4-fachen bis 0,9-fachen, bevorzugt in einem Bereich zwischen dem 0,5-fachen bis 0,85-fachen, von V_{Mitte} aufweist.

Eine bevorzugte Ausführungsform des Verfahrens ist dadurch gekennzeichnet, dass V_{rück} einen Betrag in einem Bereich zwischen dem 1,1-fachen bis 1,6-fachen, bevorzugt in einem Bereich zwischen dem 1,15-fachen bis 1,5-fachen, von V_{Mitte} aufweist.

Eine bevorzugte Ausführungsform des Verfahrens ist dadurch gekennzeichnet, dass eine mittlere Verweildauer des Plasmaerzeugers an jeder axialen Position der Glasvorform im Wesentlichen, also mit gewissen Toleranzen, gleich ist. In dieser Ausführungsform sind Vₕᵢₙ und V_{rück} derart aufeinander abgestimmt, dass der Plasmaerzeuger an einer bestimmten axialen Position der Glasvorform, welche mit einem Betrag für die relative Vorschubgeschwindigkeit, welcher zwischen V_{Mitte} und Vₕᵢₙ beziehungsweise in entgegengesetzter Richtung zwischen V_{rück} und V_{Mitte} liegt, und direkt aufeinanderfolgend zweifach überfahren wird, in Summe so lange verbleibt, wie dies bei einem zweifachen Überfahren mit der Geschwindigkeit V_{Mitte} der Fall wäre. In anderen Worten wird somit jede axiale Position der Glasvorform bei einem direkt aufeinanderfolgenden zweifachen Überfahren gleich lang der durch den Plasmaerzeuger erzeugten Plasmazone ausgesetzt. Dies führt zu einem gleichmäßigeren Abscheiden der synthetisierten Glaspartikel, insbesondere an den Rändern der Glasvorform.

Die relative Vorschubgeschwindigkeit kann den Betrag V_{Mitte} über verschiedene lange axiale Abschnitte der Glasvorform aufweisen. Beispielsweise nimmt die relative Vorschubgeschwindigkeit den Betrag V_{Mitte} lediglich genau in der Mitte der Glasvorform ein, wohingegen in Überfahrtrichtung direkt vor der Mitte der Glasvorform die relative Vorschubgeschwindigkeit einen Betrag zwischen V_{rück} und V_{Mitte} und in Überfahrtrichtung direkt nach der Mitte der Glasvorform die relative Vorschubgeschwindigkeit einen Betrag zwischen V_{Mitte} und Vₕᵢₙ aufweist. In dieser Ausführungsform weist die relative Vorschubgeschwindigkeit den Betrag V_{Mitte} im Wesentlichen an einer punktförmigen axialen Position, nämlich der Mitte, der Glasvorform auf.

Eine bevorzugte Ausführungsform des Verfahrens ist dadurch gekennzeichnet, dass die relative Vorschubgeschwindigkeit den Betrag V_{Mitte} über eine axiale Erstreckung an der Glasvorform einnimmt, welche 0 % bis 50 %, bevorzugt welche 15 % bis 45 %, weiter bevorzugt welche 20 % bis 40 %, einer axialen Gesamtlänge der Glasvorform entspricht. Diese axiale Erstreckung umfasst in jedem Fall die Mitte der Glasvorform, wobei vorzugsweise die Mitte der Glasvorform auch die axiale Mitte der axialen Erstreckung ist.

Neben der Variation der relativen Vorschubgeschwindigkeit können noch weitere Prozessparameter, insbesondere in Abhängigkeit der axialen Position der Glasvorformvariiert werden, um die thermische Belastung, insbesondere der Ränder der Glasvorform, möglichst gleichmäßig zu gestalten.

Beispielsweise kann die Drehbewegung, insbesondere in Form der Drehgeschwindigkeit, der Glasvorform um deren Längsachse, variiert werden.

Eine weitere Variationsmöglichkeit betrifft den Plasmaerzeuger in Form eines Plasmabrenners. Beispielsweise kann dessen Abstand zur Glasvorform, vorzugsweise in Form eines Glasstabs, variiert werden, um eine möglichst gleichmäßige Abscheidung der synthetisierten Glaspartikel zu erlauben.

Eine bevorzugte Ausführungsform des Verfahrens ist dadurch gekennzeichnet, dass
(i) eine Plasmaleistung in der Mitte der Glasvorform einen Wert von P_{Mitte} aufweist;
(ii) die Plasmaleistung von P_{Mitte} auf einen Wert von Pₕᵢₙ erhöht wird, wenn sich der Plasmaerzeuger relativ von der Mitte der Glasvorform auf einen der Umkehrpunkte zubewegt;
(iii) die Plasmaleistung von einem Wert P_{rück} auf P_{Mitte} erhöht wird, wenn sich der Plasmaerzeuger relativ von einem der Umkehrpunkte auf die Mitte der Glasvorform zubewegt.

In dieser Ausführungsform wird die Plasmaleistung somit mit im Vergleich zu V_{Mitte} sinkender relativer Vorschubgeschwindigkeit erhöht beziehungsweise mit im Vergleich zu V_{Mitte} gesteigerter relativer Vorschubgeschwindigkeit reduziert.

Die Temperatur der Glasvorform an einer bestimmten axialen Position variiert im Laufe des Verfahrens und hängt insbesondere ab vom Zeitpunkt des zeitlich letzten Überfahrens des Plasmaerzeugers an der entsprechenden axialen Position, von der dabei herrschenden Plasmaleistung, der Verweildauer des Plasmaerzeugers an der entsprechenden axialen Position bei dieser Überfahrt und, insbesondere bei einem Plasmaerzeuger in Form eines Plasmabrenners, von dessen Abstand zur Glasvorform, vorzugsweise in Form eine Glasstabs.

Eine bevorzugte Ausführungsform des Verfahrens ist dadurch gekennzeichnet, dass die Glasvorform im Laufe des Verfahrens eine Temperatur zwischen einer Minimaltemperatur T_{Min} und einer Maximaltemperatur T_{Max} aufweist, wobei zwischen T_{Min} und T_{Max} eine Temperaturdifferenz T_{Diff} von maximal 200 K, bevorzugt von maximal 190 K, weiter bevorzugt von maximal 180 K, liegt.

Eine bevorzugte Ausführungsform des Verfahrens ist dadurch gekennzeichnet, dass T_{Max} maximal einen Wert von 2650 °C annimmt.

Die Temperaturmessungen wurden optisch mit einer Thermokamera (Modell DIAS PyroView 640G der Firma DIAS Infrared GmbH, Deutschland) in einem Spektralbereich von 4,8 µm bis 5,2 µm durchgeführt. Die Durchführung und die benötigten Parameter einer derartigen Messung sind dem Fachmann bekannt.

### Figuren

Die Erfindung wird im Folgenden durch Figuren weiter beispielhaft illustriert. Die Erfindung ist nicht auf die Figuren beschränkt.

Es zeigen
- Fig. 1: eine schematische beispielhafte Anordnung zur Durchführung eines Verfahrens zur Herstellung einer Vorform einer optischen Faser,
- Fig. 2: eine beispielhafte Variation einer relativen Vorschubgeschwindigkeit des Verfahrens zur Herstellung einer Vorform einer optischen Faser,
- Fig. 3: einen beispielhaften Temperaturverlauf einer Glasvorform in Form eines Glasstabs während des erfindungsgemäßen Verfahrens im Vergleich zu einem Temperaturverlauf eines Glasstabs während eines Verfahrens mit konstanter relativer Vorschubgeschwindigkeit, und
- Fig. 4: ein Ablagerungsprofil einer Vorform hergestellt nach dem erfindungsgemäßen Verfahren im Vergleich zu einem Ablagerungsprofil einer Vorform hergestellt nach einem Verfahren mit konstanter relativer Vorschubgeschwindigkeit.

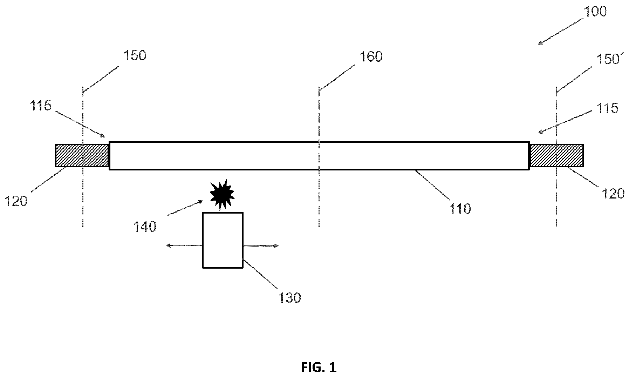

**Fig 1** zeigt eine schematische beispielhafte Anordnung 100 eines Verfahrens zur Herstellung einer Vorform einer optischen Faser. Die Anordnung umfasst eine Glasvorform 110 in Form eines Glasstabs bestehen aus einem Quarzglas, wobei die Glasvorform 110 an ihren axialen Rändern 115 zwischen zwei Glasmuffen 120 eingespannt ist, um diese zu fixieren. Die Anordnung 100 umfasst weiterhin einen Plasmaerzeuger 130 in Form eines Plasmabrenners. Der Plasmaerzeuger 130 dient im Zuge des Verfahrens einer Synthese von, optional dotierten, Glaspartikeln, in einer Plasmazone 140 in Form einer Plasmaflamme des Plasmabrenners. Dazu werden dem Plasmaerzeuger 130, insbesondere der Plasmazone 140 in Form einer Plasmaflamme, während des Verfahrens konstant Glasausgangsstoffe und optional Dotierstoffe sowie Sauerstoff und etwaige Hilfsgase zugeführt. Diese derart synthetisierten Glaspartikel werden durch Aufblasen der Plasmaflamme auf der Glasvorform 110 abgelagert, während die Glasvorform 110 einer Drehbewegung um ihre Längsachse unterliegt und der Plasmaerzeuger 130 und die Glasvorform 110 sich relativ zueinander in einer axialen Vorwärts- und Rückwärtsbewegung bewegen. Bei dieser Relativbewegung kann die Glasvorform 110, der Plasmaerzeuger 130 oder die Glasvorform 110 und der Plasmaerzeuger 130 bewegt werden. In der gezeigten Ausführungsform bewegt sich der Plasmaerzeuger 130 (angedeutet durch die zwei entgegengesetzten Pfeile am Plasmaerzeuger 130). Die Relativbewegung zwischen dem Plasmaerzeuger 130 und der Glasvorform 110 findet zwischen zwei Umkehrpunkten 150, 150' statt. Dies bedeutet in der gezeigten Ausführungsform des Verfahrens, dass der Plasmaerzeuger 130 wiederholt von einem Umkehrpunkt 150, 150' zum entgegengesetzten Umkehrpunkt 150, 150' verfahren wird, während sich die Glasvorform 110 um die eigene Längsachse dreht. Dies erlaubt ein Ablagern der in der Plasmazone 140 synthetisierten Glaspartikel über die gesamte Oberfläche der Glasvorform 110. In der gezeigten Ausführungsform liegen die Umkehrpunkte 150, 150' auf axialer Höhe der Muffen 120 und liegen so außerhalb der axialen Erstreckung der Glasvorform 110. Da die Relativbewegung an den Umkehrpunkten 150, 150' jeweils die Richtung ändert, also aus einer Vorwärtsbewegung eine Rückwärtsbewegung oder umgekehrt wird, kann es vorkommen, dass die Umkehrpunkte 150, 150' eine relativ gesehen lange Zeit der Plasmazone 140 ausgesetzt sind. Wären die Umkehrpunkte 150, 150' auf axialer Höhe der Glasvorform 110 angeordnet, könnte dies an den entsprechenden Positionen der Glasvorform 110 zu einer hohen thermischen Belastung führen, weshalb es bevorzugt ist, die Umkehrpunkte 150, 150' nicht auf axialer Höhe der Glasvorform 110 anzuordnen. Die Umkehrpunkte 150, 150' sind weiterhin gleich weit von einer Mitte 160, insbesondere axialer Mitte 160, der Glasvorform 110 entfernt, was eine gleichmäßige Ablagerung der synthetisierten Glaspartikel über die gesamte Länge der Glasvorform 110 erleichtern kann.

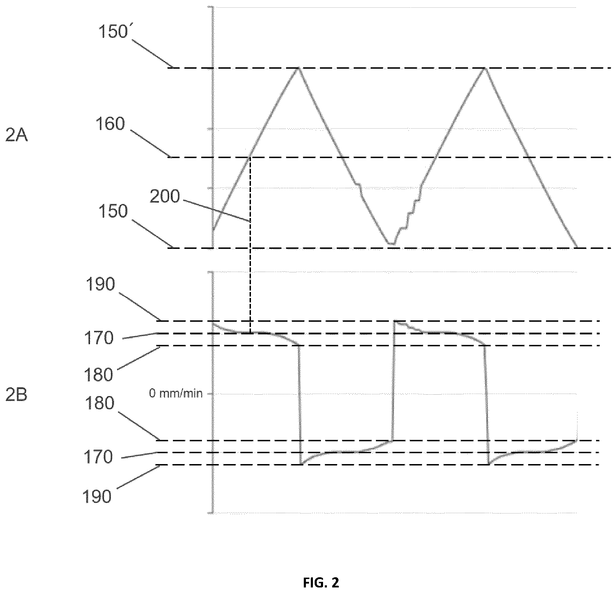

Für eine Beschreibung der Relativbewegung von Glasvorform 110 und Plasmaerzeuger 140, insbesondere der Variation der relativen Vorschubgeschwindigkeit, wird auf Figur 2 verwiesen.

**Figur 2** zeigt eine Variation der relativen Vorschubgeschwindigkeiten der Relativbewegung von Plasmaerzeuger 130 und Glasvorform 110 anhand der Anordnung 100 aus Figur 1. Die relative Vorschubgeschwindigkeit ist angepasst an die axiale Position, welche der Plasmaerzeuger 130 (siehe Figur 1) relativ zur Glasvorform 110 annimmt. Die Abbildung **2A** zeigt die axiale Position der Glasvorform 110, welche zu einem gegebenen Zeitpunkt des Verfahrens vom Plasmaerzeuger 130 überfahren wird. Zu erkennen ist, dass der Plasmaerzeuger 130 bei einer Überfahrt, zumindest relativ gesehen, jeweils von einem der Umkehrpunkte 150, 150' (siehe Figur 1) über die Mitte 160 (siehe Figur 1) der Glasvorform 110 zum axial gegenüberliegenden Umkehrpunkt 150, 150' verbracht wird, wobei bei Erreichen des Umkehrpunktes 150, 150' eine Bewegungsumkehr in Richtung des jeweils anderen Umkehrpunktes 150, 150'erfolgt.

Die Abbildung **2B** zeigt die Werte für die relative Vorschubgeschwindigkeit von Plasmaerzeuger 130 zur Glasvorform 110 in Abhängigkeit der axialen Position aus Abbildung **2A** an. Befindet sich der Plasmaerzeuger 130 auf Position der Mitte 160 der Glasvorform 110 (markiert durch gestrichelte Linie 200), nimmt die relative Vorschubgeschwindigkeit den Wert V_{Mitte} 170 an. Bewegt sich der Plasmaerzeuger 130 von der Mitte 160 der Glasvorform 110 in Richtung des Umkehrpunktes 150' (den Abbildungen von der gestrichelten Linie 200 nach rechts folgend) reduziert sich die relative Vorschubgeschwindigkeit vom Wert V_{Mitte} 170 auf den Wert Vₕᵢₙ 180, welcher bei Erreichen des Umkehrpunktes 150' angenommen wird. In der gezeigten Ausführungsform entspricht Vₕᵢₙ dem 0,8-fachen von V_{Mitte}. Am Umkehrpunkt 150' findet eine Bewegungsumkehr statt. Die Bewegungsumkehr führt den Plasmaerzeuger 130 vom Umkehrpunkt 150' über die Mitte 160 der Glasvorform 110 zum axial entgegengesetzten Umkehrpunkt 150 (den Abbildungen weiter nach rechts folgend). Diese umgekehrte Relativbewegung startet mit einer relativen Vorschubgeschwindigkeit, welche einen Wert V_{rück} 190 annimmt, wobei dieser zu diesem Zeitpunkt des Verfahrens zur Illustration der Bewegungsrichtung mit einem negativen Wert dargestellt ist. Bei der relativen Bewegung des Plasmaerzeugers 130 vom Umkehrpunkt 150' in Richtung der Mitte 160 der Glasvorform 110 verringert sich die relative Vorschubgeschwindigkeit von V_{rück} wieder auf V_{Mitte}. In der gezeigten Ausführungsform entspricht V_{rück} dem 1,2-fachen von V_{Mitte}. Dieser Ablauf der Relativbewegung wird, jeweils mit wechselnder Richtung der Relativbewegung, wiederholt, bis die gewünschte Ablagerung der synthetisierten Glaspartikel auf der Glasvorform 110 erreicht ist.

Aus Abbildung **2B** ist ersichtlich, dass die jeweilige Reduktion der relativen Vorschubgeschwindigkeit in der gezeigten Ausführungsform einen exponentiellen Verlauf aufweist.

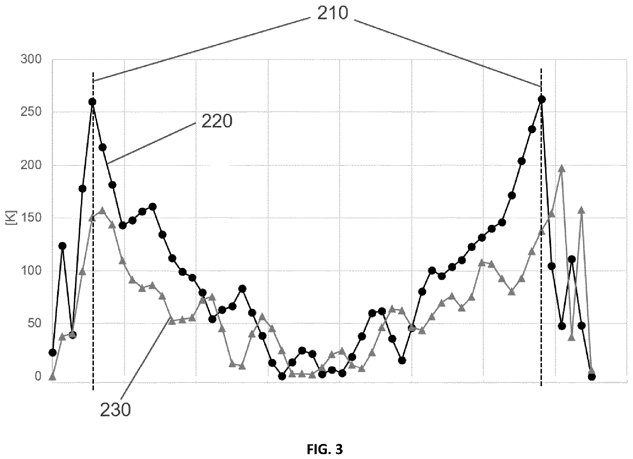

**Figur 3** zeigt eine Temperaturdifferenz Tour als Resultat der vorbeschriebenen Variation der relativen Vorschubgeschwindigkeit aus Figur 2 (Graph 220) in Kelvin. Die Temperaturdifferenz T_{Diff} ergibt sich aus einer maximalen Temperatur T_{Max} und einer minimalen Temperatur T_{Min}, welche die Glasvorform 110 in Form eines Glasstabs im Laufe des Verfahrensablauf aufweist. Zum Vergleich wird eine Temperaturdifferenz eines Vergleichsglasstabs (Graph 230) gezeigt, wobei der Vergleichsgleichstab nicht mit einer variierten relativen Vorschubgeschwindigkeit, sondern mit einer relativen Vorschubgeschwindigkeit mit einem konstanten Wert, in diesem Fall konstant mit dem Wert V_{Mitte}, überfahren wurde. Ansonsten waren die Materialien und Verfahrensbedingungen identisch. Die Temperaturunterschiede (aufgetragen auf der y-Achse) wurden jeweils aufgetragen gegen die jeweilige axiale Position der Messung (aufgetragen auf der x-Achse). Zur besseren Übersichtlichkeit wurden die Enden der Glasstäbe 110 mit den gestrichelten Linien 210 markiert.

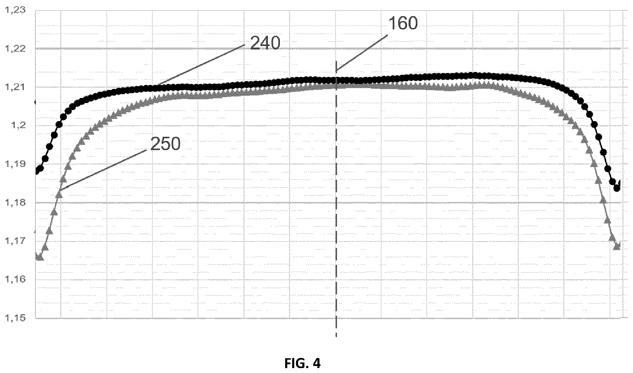

Aus Figur 3 ist ersichtlich, dass die erfindungsgemäße variable relative Vorschubgeschwindigkeit, welche zwischen den Werten V_{Mitte}, Vₕᵢₙ und V_{rück} in Abhängigkeit der axialen Position von Plasmaerzeuger 140 und Glasvorform 110 variiert wird, zu einer gleichmäßigeren thermischen Belastung (kleinere Temperaturdifferenzen, insbesondere im Bereich der Ränder 115 der Glasvorform 110) führt. Dies führt zu einer gleichmäßigeren Ablagerung der synthetisierten Glaspartikel auf der Glasvorform 110, so dass weniger Produktionsausschuss anfällt (siehe auch Figur 4).

**Figur 4** zeigt ein Ablagerungsprofil 240 einer mit dem erfindungsgemäßen Verfahren hergestellten Vorform aus Figur 2 und der dabei herrschenden Temperaturdifferenz T_{Diff} aus Figur 3 (siehe Graph 220) im Vergleich zu einem Vergleichsablagerungsprofil 250 einer Vergleichsvorform, welche aus dem Verfahren mit dem Vergleichsglasstab mit konstanter relativer Vorschubgeschwindigkeit und der entsprechenden Temperaturdifferenz aus Figur 3 (siehe Graph 230) hergestellt wurde. Aufgetragen ist jeweils das Verhältnis des Außendurchmessers des Ausgangsglasstabs gegen den Außendurchmesser der finalen Vorform (y-Achse) gegen die axiale Position (x-Achse) über die gesamte Länge der Vorform. In der jeweiligen Mitte 160 der Vorform, welche jeweils mit der relativen Vorschubgeschwindigkeit mit dem Wert V_{Mitte} überfahren wird, sind vergleichbare Ablagerungen zu finden. An den beiden Rändern der Vorformen sind allerdings deutliche Unterschiede zu finden: während die Vergleichsvorform deutliche geringere Ablagerung an den Rändern aufweist, sind die Ränder der erfindungsgemäß hergestellten Vorform im Vergleich deutlich angehoben, was zu weniger Produktionsausschuss führt.

### Bezugszeichen

- 100: Anordnung
- 110: Glasvorform
- 120: Glasmuffe
- 130: Plasmaerzeuger
- 140: Plasmazone
- 150, 150': Umkehrpunkt
- 160: Mitte der Glasvorform
- 170: V_{Mitte}
- 180: Vₕᵢₙ
- 190: V_{rück}
- 200: gestrichelte Linie
- 210: Enden der Glasvorform
- 220: Temperaturunterschied mit variabler relativer Vorschubgeschwindigkeit
- 230: Temperaturunterschied mit konstanter relativer Vorschubgeschwindigkeit
- 240: Ablagerungsprofil mit variabler relativer Vorschubgeschwindigkeit
- 250: Ablagerungsprofil mit konstanter relativer Vorschubgeschwindigkeit

## Patentansprüche

1. Verfahren zur Herstellung einer Vorform einer optischen Faser, umfassend die Verfahrensschritte:
a. Synthetisieren von Glaspartikeln unter Verwendung einer durch einen Plasmaerzeuger (130) erzeugten Plasmazone (140);
b. Wiederholtes axiales Vorwärts- und Rückwärtsbewegen einer Glasvorform (110) relativ zum Plasmaerzeuger (130) während einer Drehbewegung der Glasvorform (110), wobei das Vorwärts- und Rückwärtsbewegen zwischen zwei Umkehrpunkten (150, 150') mit einer relativen Vorschubgeschwindigkeit stattfindet;
c. Ablagern der Glaspartikel auf der Glasvorform (110), während sich die Glasvorform (110) relativ zum Plasmaerzeuger (130) bewegt und dreht;
**dadurch gekennzeichnet, dass**
(i) die relative Vorschubgeschwindigkeit des Plasmaerzeugers (130) zur Glasvorform (110) in einer Mitte (160) der Glasvorform (110) einen Betrag V_{Mitte} aufweist;
(ii) die relative Vorschubgeschwindigkeit des Plasmaerzeugers (130) zur Glasvorform (110) von V_{Mitte} auf einen Betrag Vₕᵢₙ reduziert wird, wenn sich der Plasmaerzeuger (130) relativ von der Mitte (160) der Glasvorform (110) auf einen der Umkehrpunkte (150, 150') zubewegt;
(iii) die relative Vorschubgeschwindigkeit des Plasmaerzeugers (130) zur Glasvorform (110) von einem Betrag V_{rück} auf V_{Mitte} reduziert wird, wenn sich der Plasmaerzeuger (130) relativ von einem der Umkehrpunkte (150, 150') auf die Mitte (160) der Glasvorform (110) zubewegt.

2. Verfahren nach Anspruch 1, **wobei** V_{rück} > V_{Mitte} > Vₕᵢₙ ist.

3. Verfahren nach Anspruch 1 oder 2, **wobei** eine Differenz der Beträge von V_{Mitte} zu Vₕᵢₙ im Wesentlichen einer Differenz der Beträge von V_{rück} zu V_{Mitte} entspricht.

4. Verfahren nach einem der vorhergehenden Ansprüche, **wobei** die Reduktionen der relativen Vorschubgeschwindigkeiten von V_{Mitte} auf Vₕᵢₙ und von V_{rück} auf V_{Mitte} einen im Wesentlichen exponentiellen oder parabelförmigen Verlauf aufweisen.

5. Verfahren nach einem der vorhergehenden Ansprüche, **wobei** die in Verfahrensschritt a.
synthetisierten Glaspartikel einen Dotierstoff enthalten.

6. Verfahren nach einem der vorhergehenden Ansprüche, **wobei** V_{Mitte} einen Betrag in einem Bereich zwischen 500 mm/min und 3000 mm/min aufweist.

7. Verfahren nach einem der vorhergehenden Ansprüche, **wobei** Vₕᵢₙ einen Betrag in einem Bereich zwischen dem 0,4-fachen bis 0,9-fachen von V_{Mitte} aufweist.

8. Verfahren nach einem der vorhergehenden Ansprüche, **wobei** V_{rück} einen Betrag in einem Bereich zwischen dem 1,1-fachen bis 1,6-fachen von V_{Mitte} aufweist.

9. Verfahren nach einem der vorhergehenden Ansprüche, **wobei** eine mittlere Verweildauer des Plasmaerzeugers (130) an jeder axialen Position der Glasvorform (110) im Wesentlichen gleich ist.

10. Verfahren nach einem der vorhergehenden Ansprüche, **wobei** die relative Vorschubgeschwindigkeit den Betrag V_{Mitte} über eine axiale Erstreckung an der Glasvorform (110) einnimmt, welche 0-50 % einer axialen Gesamtlänge der Glasvorform (110) entspricht.

11. Verfahren nach einem der vorhergehenden Ansprüche, **wobei**
(i) eine Plasmaleistung in der Mitte (160) der Glasvorform (110) einen Wert von P_{Mitte} aufweist;
(ii) die Plasmaleistung von P_{Mitte} auf einen Wert von Pₕᵢₙ erhöht wird, wenn sich der Plasmaerzeuger (130) relativ von der Mitte (160) der Glasvorform (110) auf einen der Umkehrpunkte (150, 150') zubewegt;
(iii) die Plasmaleistung von einem Wert P_{rück} auf P_{Mitte} erhöht wird, wenn sich der Plasmaerzeuger (130) relativ von einem der Umkehrpunkte (150, 150') auf die Mitte (160) der Glasvorform (110) zubewegt.

12. Verfahren nach Anspruch 11, **wobei** die Plasmaleistung erhöht wird, wenn die relative Vorschubgeschwindigkeit reduziert wird.

13. Verfahren nach einem der vorhergehenden Ansprüche, **wobei** die Glasvorform (110) im Laufe des Verfahrens eine Temperatur zwischen einer Minimaltemperatur T_{Min} und einer Maximaltemperatur T_{Max} aufweist, wobei zwischen T_{Min} und T_{Max} eine Temperaturdifferenz T_{Diff} von maximal 200 K liegt.

14. Verfahren nach Anspruch 13, **wobei** T_{Max} maximal einen Wert von 2650 °C annimmt.

15. Verfahren nach einem der vorhergehenden Ansprüche, **wobei** die Glasvorform (110) ein Glasstab, der Plasmaerzeuger (130) ein Plasmabrenner und die Plasmazone (140) eine Plasmaflamme ist.
